# EUROPEAN PATENT APPLICATION

(11) **EP 1 455 187 A1**
(43) Date of publication of application: **08.09.2004**
(21) Application number: 03447046.8
(22) Date of filing: 05.03.2003
(51) Int. Cl.: G01N 33/543, B01L 3/00, G01N 1/28, G01N 15/06

(54) **Device for filtering and transfering particles**

(71) Applicant: Labonord, 59175 Templemars (FR)
(72) Inventor: Magniette, Olivier, 9831 Deurle (BE)
(74) Representative: Brants, Johan Philippe Emile

(57) **Abstract**

The present invention relates to a device for collecting and transferring a quantity of particles that have a average size above a threshold size and that are dispersed in a medium, comprising a tubular body of suitable thickness, having a first axial end spaced from a second axial end, and having a extending rim at said first axial end, a filter membrane capable of being removably mounted on and spanning said first axial end of said tubular body, said membrane being suitable for blocking particles having an average size above said threshold size, and an annular clamping body, capable of being removably mounted on said extending rim of said tubular body and suitable for clamping said filter membrane on said tubular body. The invention also relates to the use of the present device as a device for collecting and transferring a quantity of particles or as a filtering device.

## Description

### Field of the invention

The present invention relates to the medical field of particle collection and transfer. The invention relates in a first aspect to a device for collecting a quantity of microscopic particles, such as cells, from a biological sample and transferring the collected cells to an optical device for visualizing the collected cells. In another aspect, the invention relates to a method for fabricating such device. The invention also relates to the use of said device for collecting and transferring a quantity of particles that are dispersed in a medium and to a method for visually examining a quantity of particles. The invention is useful in cytology, which is a medical and laboratory science that makes diagnoses based on findings in cells.

### Background of the invention

Cytology is less invasive to a patient than traditional surgical pathological procedures, e.g. biopsy. All that is required for cytology is that a sample of cells be obtained from the patient, which can typically be done by scraping or swabbing an area, as in the case of cervical samples, by procuring fluids from body sites such as the chest cavity, bladder, or spinal canal, or by needle aspiration. After a solution containing cells is obtained using one of these techniques, the cells are collected from the solution and transferred onto a glass slide for viewing.

This processing of the cells typically requires that the cells be separated from one another, i.e. dispersed, so that individual cells can be transferred to the glass slide for visual examination. In some practices, the cells are counted, so that a generally known quantity of the cells is examined. It is important for effective visual examination that the cells have a proper spatial distribution. This enables individual cells to be examined. Ideally, this means that a single layer of cells is collected and transferred to the glass-viewing slide.

In the art, several devices for collecting a dispersed monolayer of cells, and for transferring them to a microscope slide for examination have been described. Such devices comprise for instance a surface-collecting filter spanning an end of a tube. However, prior art devices for dispersing cells and for collecting a measured quantity of the cells; and for transferring them to an optical slide for visual examination, have several disadvantages. These include shortcomings such as requiring costly equipment, being time-consuming, requiring undue operator attention, and providing limited performance in terms of reliability, repeatability, accuracy and precision.

Another major disadvantage of the currently known devices is that not all the collected cells are transferred to the viewing slide. This loss of cells is undesirable, and the variations in the portion of cells that are transferred is also undesirable. The loss of transferred cells reduces the number of cells available for inspection and it can result in a generally unknown quantity of cells being transferred to the glass slide.

In addition, currently known devices are of temporary use. Known filter devices are generally used only once and then discarded, to avoid inter-sample contamination. However, such handling of the filter devices implicates additional equipment costs since for every experiment a new filter device needs to be used, and also implicates considerable disposal costs for disposing the used filter devices.

Accordingly, it is a general object of the present invention to provide an improved device for collecting and transferring a quantity of particles. It is in particular an object of this invention to provide an improved device for collecting and transferring a quantity of particles with minimal loss of particles. Also, it is further an object of the present invention to provide an improved device, which enables easier and rapid visual examination of a quantity of collected particles. A further object is to provide a cost-effective and easy method for fabricating such particle collecting and transferring device. The invention also aims to provide a kit for collecting and transferring a quantity of particles.

### Summary

In a first embodiment the invention relates to a device for collecting and transferring a quantity of particles that have an average size above a threshold size and that are dispersed in a medium, comprising
a tubular body of suitable thickness, having a first axial end spaced from a second axial end, and having an extending rim at said first axial end,
a filter membrane capable of being removably mounted on and spanning said first axial end of said tubular body, said membrane which is provided with pores of a threshold size, being suitable for collecting particles having an average size above said threshold size, and
an annular clamping body, capable of being removably mounted on said tubular body and suitable for clamping said filter membrane on said tubular body.

In the device of the present invention, the filter membrane can be removably mounted and removed from the tubular body. This has the advantage that after use, only the filter membrane needs to be discarded. Advantageously, the tubular body and the annular clamping body can be re-applied in other cytological analyses. This enables to reduce equipment costs and also considerably reduces the amount of disposal waste obtained with the present device. Moreover, disposal of the filter membrane enables to avoid inter-sample contamination and reduces bio-hazard risks from the handling of the samples.

Furthermore, the present device enables to collect a particular quantity of particles on the surface of said filter membrane. The collected particles can then be transferred to an optical device for visual examination. Therefore, the collected particles can be transferred to a carrier for optical examination, suitable for being used in an optical device, by bringing the particle carrying surface of said filter membrane into abutment with said carrier. Due to the fact that the surface of said filter membrane is well tensioned, the membrane can make optimal contact with said carrier and an optimal transfer of the collected particles to the carrier with minimal loss of particles is obtained. In another embodiment, the particle carrying surface of said filter membrane can be transferred as such to an optical device for visual examination, without the need to remove the collected cells from the membrane. Advantageously, transfer of the complete membrane to an optical device enables to avoid loss of collected particles. In addition, such transfer is very easy, is very time-effective and does not require undue operator attention.

In the present device, the extending rim on the tubular body creates an annular surface recessed inwardly on the first axial end of the tubular body. The filter membrane is attached to this annular inwardly recessed surface by means of an annular clamping body. This allows the filter to be attached to the tubular body in a very easy way with a low cost bonding technique, whereby very stable attachment of the filter membrane to the tubular body is obtained.

In another aspect, the present invention relates to a method for fabricating a device according to the present invention. Said method comprises the steps of
providing a tubular body, having a first axial end spaced from a second axial end, and having an extending rim at said first axial end, said extending rim forming an annular mounting surface recessed inwardly of the tubular body,
mounting a filter membrane, provided with a particle collecting surface, on the extending rim at the first axial end of said tubular body,
fastening said filter membrane on said tubular body by mounting an annular clamping body on the extending rim of said tubular body, such that said filter membrane is clamped between said tubular body and said annular clamping body,
shrinking said filter membrane such that said particle collecting surface of said filter membrane is uniformly tensioned.

According to the present invention, the device can be manufactured at relatively low cost in a very simple way. Furthermore, the method is highly reproducible such that different devices can be fabricated that provide a consistent and uniform transfer of collected particles to a carrier.

In another aspect, the present invention relates to a kit for collecting and transferring a quantity of particles that have a average size above a threshold size and that are dispersed in a medium, comprising
a tubular body of suitable thickness, having a first axial end spaced from a second axial end, and having an extending rim at said first axial end,
an annular clamping body, capable of being removably mounted on said extending rim of said tubular body and suitable for clamping a filter membrane on said tubular body, and
one or more filter membranes capable of being removably mounted on and spanning said first axial end of said tubular body, said membranes being provided with pores of a threshold size suitable for collecting particles above said threshold size, whereby said membranes may have a same or different pore sizes.

The tubular body and the annular clamping body of the present device can be used with different types of filter membranes. Filter membranes having a particular threshold pore size, which is suitable for collecting particles having an average size above this threshold size, can be used. The threshold size may vary and be selected in function of the cells or particles to be analyzed. The filter membrane can then be easily mounted and spanned on the tubular body of the present device. Thus, a specific device having a particular filter type, suitable for the analysis of a particular sample, can be obtained. The invention provides for a kit comprising a tubular body and the annular clamping body, and wherein different types of membranes are provided.

In yet another aspect, the present invention relates to the use of a device according to the present invention for collecting and transferring a quantity of particles that have an average size above a threshold size and that are dispersed in a medium. The device according to the invention is particularly useful in the performance of cytological procedures.

In yet another aspect, the present invention also relates to the use of a device according to the present invention for filtering a medium such that a quantity of particles that have an average size above a threshold size and that are dispersed in a medium are retained on the filter membrane of said device.

In another embodiment the present invention provides an improved method for visually examining a quantity of collected particles, which is easier and which overcomes the drawbacks of the currently available methods. Said method for visually examining a quantity of particles that have an average size above a threshold size and that are dispersed in a medium comprises the steps of
collecting said particles by bringing said particles into contact with a filter membrane being removably mounted and spanned on a tubular body by means of an annular clamping body, in a device according to the present invention,
transferring said collected particles to an optical device, and
visually examining said collected particles.

As mentioned above, in a preferred embodiment, said collected particles are transferred to a carrier for optical examination, suitable for being used in an optical device, by bringing the particle carrying surface of said filter membrane into abutment with said carrier. In an alternative embodiment, said particle carrying surface of said filter membrane is advantageously and easily transferred as such to an optical device.

In another embodiment the present invention provides an improved method for filtering a medium comprising a quantity of particles that have an average size above a threshold size and that are dispersed in said medium comprising the steps of:
separating said particles from said medium by bringing said medium into contact with a filter membrane being removably mounted and spanned on a tubular body by means of an annular clamping body in a device according to the present invention, such that said particles comprised in said medium are collected on said filter membrane, and
collecting the medium passing through said filter membrane.

Those skilled in the art will immediate recognize the many other effects and advantages of the present device and the numerous possibilities for end uses of the present invention from the detailed description provided below in accordance with the accompanying figures.

### Detailed description of the figures

Figure 1 provides an exploded view of an embodiment of a non-assembled device according to the present invention, comprising a tubular body, a filter membrane and a annular clamping body.
Figure 2 illustrates a perspective view of an assembled device 1 according to the present invention.
Figure 3 shows a cross-sectional view of an embodiment of a non-assembled device according to the present invention.
Figure 4 shows a cross-sectional view of an embodiment of an assembled device according to the present invention.

### Detailed description of the invention

In a first aspect, the invention relates to an improved device for collecting a quantity of microscopic particles, such as cells, from a biological sample and transferring the collected cells to a carrier, such as a glass microscope slide. The device according to the present invention can also be used a filtering device.

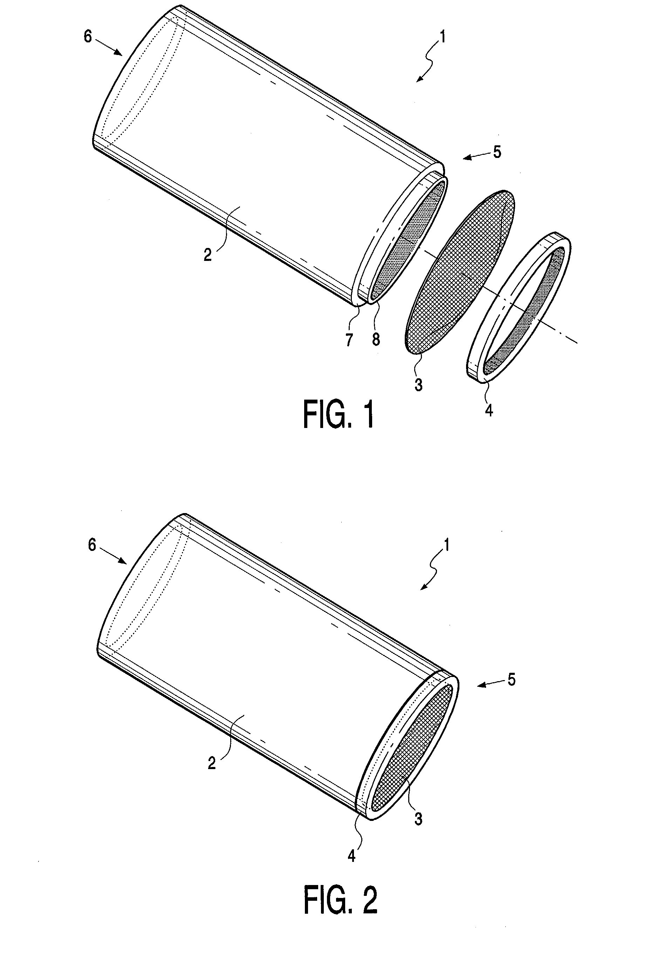

It is accordingly one feature of the invention to provide a particle collecting and transferring device that has a planar surface-collecting filter, a support body and an annular clamping ring. The device according to the invention is best represented with reference to the figures 1-4. As shown on figure 1, the support body preferably is a tubular body 2 that mounts the filter 3 on an extending rim 8 at one end 6 of the body 2. More particularly, the tubular body 2 has a cylindrical wall extending along an axis. The tubular support body 2 preferably has opposed axial ends 5, 6, a first axial of which is open 5, and a second axial 6 of which can be open or closed.

In a preferred embodiment, the tubular body 2 comprised in the device 1 according to the present invention preferably has an external diameter comprised between 0.5 and 5 cm, and more preferred between 1.5 and 2.5 cm. In another preferred embodiment, the tubular body 2 comprised in the device according to the present invention preferably has an internal diameter comprised between 0.2 and 4.8 cm, and even more preferred between 1.1 and 2.4 cm. In yet another preferred embodiment, said tubular device 2 has a thickness comprised between 0.1 and 0.5 cm. In another preferred embodiment, said tubular body 2 has a length comprised between 0.5 and 10 cm, and preferably between 4 and 7 cm. Preferably said tubular body is made of thermoplastic polymer such as polypropylene, polyethylene, polystyrene, polycarbonate or the like.

As shown on figure 1, an extending rim 8 is provided at one axial end 5 of the cylindrical wall of the tubular body 2 for supporting a filter element in a planar orientation. In a preferred embodiment, said extending rim 8 forms an annular mounting surface 7 recessed inwardly of the tubular body 2. Thus, preferably, said annular extending rim 8 has an internal diameter which is similar to the internal diameter of said tubular body 2 and an external diameter, which is smaller than the external diameter of said tubular body. The illustrated mounting surface 7 is thus an annular surface concentric with the annular extending rim 8. The extending rim is suitable for accepting the annular clamping ring 4, which has dimensions, which are suitable for applying the annular clamping ring on the tubular body 2 and in particular on the extending rim 8.

Preferably, the extending rim of said tubular body has an external diameter comprised between 0.2 and 4.9 cm, and even more preferred between 1.4 and 2.4 cm. In another preferred embodiment, the extending rim preferably has an internal diameter comprised between 0.2 and 4.8 cm, and even more preferred between 1.1 and 2.4 cm. In yet another preferred embodiment, said extending rim 8 has a thickness comprised between 0.1 and 0.5 cm. In another preferred embodiment, said has a length comprised between 0.1 and 5 cm, and preferably between 0.2 and 2.5 cm.

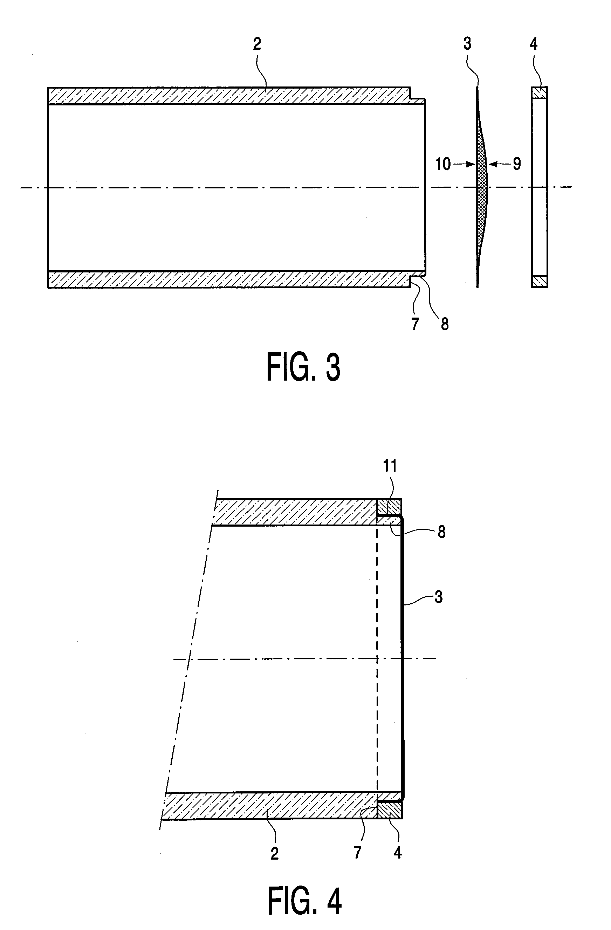

A further feature of the device 1 is a surface-collecting type filter membrane 3 spanning the tubular body 2 and clamped on the extending rim 8 of the tubular body by means of the annular clamping body 4, as illustrated in figure 2 and 4. The filter membrane 3 can be mounted on the extending rim 8 by use of an annular clamping body 4. Therefore, the annular clamping body is clamped onto the annular mounting surface 7 of the tubular body 2. The dimensions of the annular clamping body 4 preferably match with the dimensions of the annular mounting surface 7, for obtaining a stable clamping.

As shown on figure 3, the filter membrane 3 has in a preferred embodiment, a diameter which is greater than the external diameter of said extending rim 8. This feature enables to mount and span the filter membrane 3 on the tubular body 2. Practically, the membrane is mounted on the tubular body, such that a portion of the filter membrane 11, as shown on figure 4, at least partly covers the extending rim 8 of said tubular body 2. When fastening the filter membrane 3 on the tubular body, this portion of the filter membrane 11 is fastened by applying the annular clamping body 4 on said annular mounting surface 7 and said extending rim 8. In this way a very stable attachment of the filter membrane 3 to the tubular body 2 can be obtained. In addition, application of the annular clamping body is very easy. In a preferred embodiment, the filter membrane 3 according to the present invention preferably has a diameter comprised between 0.3 and 5.5 cm, and even more preferred between 1.5 and 3 cm.

In another embodiment, the filter membrane (3) has a surface which is suitable for collecting particles thereon. As illustrated on figure 3, the filter membrane 3 may have an inner surface 10 facing inwardly from the tubular body 2, and an outer surface 9 facing outwardly from the tubular body 2. The particles may for instance be collected on the inner surface 10 or on the outer surface 9 or on both surfaces 9, 10 of the filter membrane 3. In an embodiment, preferably when the device according to the invention is used as a particle collecting and transferring device, particles are collected onto said outer surface 9, facing outwardly from the tubular body 2, when said surface is brought into contact with a medium containing particles. Alternatively, in another embodiment, preferably when the device according to the invention is used as a filtering device, particles are collected onto said inner surface 10, facing outwardly from the tubular body 2, when a medium containing particles is provided inside the tubular body 2.

In a preferred embodiment, the filter membrane is a membrane suitable for being visually examined. Suitable filter membrane preferably is optically clear, such that light can easily pass through the membrane when provided in an optical device, such as a microscope, or the like. In addition, the membrane preferably shows low background fluorescence. In an embodiment said filter membrane may be transparent, white or black.

The collected particles can be transferred to a carrier for optical examination by bringing the particle carrying outer surface 9 of said filter membrane into abutment with said carrier. The carrier is brought into abutment with the particle-carrying outer surface 9 of the filter 3 to effect the transfer of the collected particles. A highly planar surface-collecting filter 3 is preferably applied, which is suitable for the collection of particles from a fluid and for the precise and uniform abutment with a microscope slide or other carrier, so that a consistent and maximal portion of the collected particles can readily be transferred to that carrier, and with a maximal retention of the spatial distribution that the particles had on the filter. Alternatively, the particle carrying outer surface 9 of said filter membrane can also be transferred as such to an optical device for visual examination, without the need to remove the collected cells from the membrane. The term "visual examination" is used herein in a broad context and includes human visual inspection as well as machine image inspection. It also includes inspection with various types of illumination. Also, practice of the invention can include procedures, such as staining, conventionally performed between collecting the cells and the actual examination.

The filter membrane 3 according to the present invention is preferably a sheet-like filter, and more preferably a pore membrane filter. The screen-type filter is preferably perforated with a uniform distribution of pores of substantially uniform size to collect cells and other particles above a threshold size determined by the size of the pores, and to freely pass smaller particles. The filter has a filtering surface 9, 10, illustrated as an essentially flat disc that has a surface area of known or readily determined size. In a particularly preferred embodiment, said filter membrane is provided with pores of a threshold size comprised between 0.2 µm and 15 µm, and is thus suitable for collecting particles having an average size above these pore sizes. However, it is clear that also other filter membranes having other threshold pore size may be applied according to the present invention. As mentioned above, different types of filter membranes are suitable for being applied in the device according to the invention, and selection of a particular type of filter may be made in function of the particles or cells to be analyzed. Preferably, said filter membrane 3 is a thin membrane having a thickness comprised between 5 and 20 µm. The filter is preferably a polycarbonate membrane treated with a wetting agent to be hydrophilic, as commercially available from manufacturers.

As illustrated on figures 1 to 4, the annular clamping body 4 is suitable for being mounted on the annular mounting surface 7 recessed inwardly of the tubular body 2. More in particular, the annular clamping body 4 has an internal diameter, which is equal to or greater than the external diameter of said rim 8. This annular ring 4 is particularly suitable for fastening the filter membrane 3 on the tubular body 2, and provides stable and solid bonding of the filter membrane 3 to the tubular body 2.

In a preferred embodiment, the annular clamping body comprised in the device according to the present invention preferably has an external diameter comprised between 0.3 and 5.5 cm, and even more preferred between 1.0 and 3.0 cm. In another preferred embodiment, the annular clamping body comprised in the device according to the present invention preferably has an internal diameter comprised between 0.2 and 4.9 cm, and even more preferred between 1.4 and 2.4 cm. In yet another preferred embodiment, said annular clamping body has a thickness comprised between 0.1 and 0.5 cm. In another preferred embodiment, said annular clamping body has a length comprised between 0.1 and 5 cm, and preferably between 0.2 and 2.5 cm. Preferably said annular clamping body is made of polypropylene, polyethylene, polystyrene, polycarbonate or the like. In another preferred embodiment, said annular clamping body 4 can be provided with a label, for instance a particular color, for indicating the type of sample or cells that are being collected and transferred with the device 1.

In a preferred example a device according to the invention is provided wherein the tubular body has an external diameter of 2.5 cm, an internal diameter of 2.1 cm, a thickness of 0.2 cm and a length of 5.2 cm. In said example, the tubular body has an extending rim that has an external diameter of 2.3 cm, an internal diameter of 2.1 cm, a thickness of 0.1 cm and a length of 0.2 cm. In this example, the filter membrane of the device has an external diameter of 2.5 cm, a thickness of 10 µm and a pore size of 5 µm. The clamping body in this example has an external diameter of 2.5 cm, an internal diameter of 2.3 cm, a thickness of 0.1 cm and a length of 0.2 cm.

In another preferred embodiment, the device according to the present invention, further comprises means for closing said second axial end of said tubular body, said means being provided with a port suitable for being connected to a pressure unit. Adjacent to the second axial end of the tubular body, a removable cover that can seal said axial end of the tubular body can be provided. Such cover preferably has a through conduit or port. The cover can fit with the cylindrical wall of the tubular body to provide a fluid tight seal closing that end of the tubular body, except for the aperture that the port provides. When the device is inverted such that the filter-carrying end 5 of the device 1 is immersed in a liquid sample containing particles, a vacuum can be applied to the port and liquid is aspirated into the interior of the tubular body 2. Particles carried in a liquid can be collected onto the outer surface 9 of the filter membrane. After removal from the particle containing liquid, the device can be placed in abutment with a microscope slide. The cells or other particles collected on the filter membrane are then transferred to the glass slide. Alternatively, the particle-containing membrane 3 can be removed from the tubular body 2, can be stained with a suitable staining product and placed as such under a microscope.

According to another embodiment, the present invention further relates to a method for fabricating a device according to the present invention. According to this method, there is provided a tubular body 2, having a first axial end 5 spaced from a second axial end 6, and having an extending rim 8 at said first axial end 5, said extending rim forming an annular mounting surface 7 recessed inwardly of the tubular body 2. A filter membrane 3, provided with a particle collecting surface is mounted on the extending rim 8 at the first axial end 5 of said tubular body 2. In a preferred embodiment, the diameter of the filter membrane 3 is greater than the external diameter of the rim 8, as shown on figure 4. Then said filter membrane 3 is fastened on said tubular body 2 by mounting an annular clamping body 4 on the extending rim 8 of said tubular body 2, such that said filter membrane 3 is clamped between said tubular body 2 and said annular clamping body 4. Thus, the filter membrane 3 is fastened on the tubular body 2 by being clamped on extending rim 8 by means of the annular clamping body 4, which is mounted on the annular mounting surface 7.

It is also preferred that the membrane filter be sufficiently taut to be free of wrinkles and to have effectively no sag. The membrane material can be stretched to have this desired tautness concurrent with or subsequent to fastening to the tubular body. In a preferred embodiment, said method comprises the step of shrinking said filter membrane 3 such that said particle collecting surface of said filter membrane is uniformly tensioned. A further preferred practice according to the invention is to employ a heat-shrinkable material for the membrane filter, such as polycarbonate, and to subject it to sufficient heat to shrink it to attain the desired degree of stretch. Therefore, a preferred embodiment of said method comprises the shrinking step of providing heat to said filter membrane 3 such that said filter membrane is caused to shrink and is uniformly tensioned. The filter-shrinking step uniformly tensions the filter to enhance the flat, wrinkle-free disposition of the filter on the tubular body.

The shrinking step comprises the application of heat, which may be any heat source such as hot air, a flame-producing device, or the like, under very controlled conditions. One device for performing the filter-shrinking step uses a variable temperature hot air source, and a flow-directing baffle -to direct a hot air flow onto the filter fastened on the body. The tubular body, with the fastened filter is passed under the flow-directing baffle of the hot air source at a controlled speed and a minimal spacing. The hot air temperature is maintained such that the filter contracts and is tensioned substantially uniformly in all directions.

In another preferred embodiment, the invention relates to a kit for collecting and transferring a quantity of particles that have a average size above a threshold size and that are dispersed in a medium, comprising a tubular body 2 according to the invention of suitable thickness, having a first axial end 5 spaced from a second axial end 6, and having an extending rim 8 at said first axial end 5; an annular clamping body 4 according to the invention, capable of being removably mounted on said extending rim 8 of said tubular body 2 and suitable for clamping a filter membrane 3 on said tubular body 2, and one or more filter membranes 3 according to the invention capable of being removably mounted on and spanning said first axial end 5 of said tubular body 2, said membranes being provided with pores of a threshold size suitable for collecting particles above said threshold size, whereby said membranes may have a same or different pore sizes. In said kit, said tubular body 2 and said annular clamping body 4 are preferably those as described in the present invention. The tubular body and the annular clamping body of the present device can be used with different types of filter membranes. Filter membranes having a particular threshold pore size, which is suitable for collecting particles having an average size above this threshold size, can be used. The threshold size may vary and be selected in function of the cells or particles to be analyzed. The filter membrane can then be easily mounted and spanned on the tubular body of the present device. Thus, a specific device having a particular filter type, suitable for the analysis of a particular sample, can be obtained.

In yet another embodiment, a collection vessel suitable for receiving a liquid medium that carries cells, which is capable of containing said tubular body 2, may be further provided in the kit according to the invention. The tubular body, having a filter membrane and an annular clamping ring mounted thereon, can be disposed in such collection vessel with the filter device immersed in the fluid in the vessel. The collection vessel is preferably open at the top to the atmosphere and can be an open vessel such as a cup, vial, or beaker.

In another embodiment, the invention relates to the use of a device according to the invention for collecting and transferring a quantity of particles that have an average size above a threshold size and that are dispersed in a medium. A method for visually examining a quantity of particles that have an average size above a threshold size and that are dispersed in a medium according to the invention comprises the steps of collecting said particles by bringing said particles into contact with a filter membrane 3 being removably mounted and spanned on a tubular body 2 by means of an annular clamping body 4, according to the invention, transferring said collected particles to an optical device, and visually examining said collected particles. In particular, a suitable method may comprise the following steps. First a device according to the present invention is provided in a collection vessel containing a liquid medium that carries cells. The tubular body, having a filter membrane and an annular clamping ring mounted thereon, can be disposed in such collection vessel with the filter device immersed in the fluid in the vessel. In one specific cytological embodiment, the tubular body preferably disposes the filter membrane immersed below the level of a cell-carrying liquid in the vessel. The fluid medium is allowed to flow across the filter membrane from the vessel to the tubular body. As a consequence thereof, particles in the medium having an average size above the threshold size of the filter membrane are blocked and collected by said filter membrane. After termination of the flow path, the device is removed from the liquid medium. The collected particles can be transferred to a carrier for optical examination, suitable for being used in an optical device, by bringing the particle carrying surface of said filter membrane 3 into abutment with said carrier. Alternatively, said particle carrying surface of said filter membrane 3 is transferred as such to an optical device.

In another embodiment, the invention also relates to the use of a device according to the invention for filtering a medium such that a quantity of particles that have an average size above a threshold size and that are dispersed in said medium are retained on the filter membrane 3 of said device. A method for filtering a medium comprising a quantity of particles that have an average size above a threshold size and that are dispersed in said medium according to the invention comprises the steps of separating said particles from said medium by bringing said medium into contact with a filter membrane 3 being removably mounted and spanned on a tubular body 2 by means of an annular clamping body 4, in a device according to the invention, such that said particles comprised in said medium are collected on said filter membrane 3, and collecting the medium passing through said filter membrane 3. A medium comprising a quantity of particles that have an average size above a threshold size can for instance be brought into contact with the filter membrane of the present device, b providing medium inside the tubular body 2. The particles having an average size above a threshold size are then retained and collected on said filter membrane, while medium is further passing through said membrane and can be collected in a recipient or the like. The collected medium, being free of particles having an average size above a threshold size can then subsequently be analyzed.

Particles present in a gaseous as well as liquid media can be collected or filtered using the device according to the present invention. For instance, for particles in a gaseous medium, a flow of air carrying microscopic particles, for example, contaminants above a size, can be directed across a membrane filter that blocks particles of interest while passing smaller particles, and a quantity of the particles can be collected on the filter for further measurement or other processing, or the air passing through the filter can be further analyzed.

A quantity of cells collected on the surface of the filter membrane can if desired, be transferred from the filter to, for example, a microscope slide for image analysis either visually or by machine vision or both. The transfer of the collected cells from the filter to a microscope slide can be carried out by applying a slight mechanical pressure within the tubular body against the filter, e.g. by pressing an alcohol-bearing sponge against the filter, after microscope slide is brought into contact with the filter, to essentially lift the cells off the filter to adhere to the microscope slide. Alternatively, the filter membrane as such can be applied in a microscope.

The invention thus provides a device for determining information regarding particles above threshold size, including airborne particles and biological cells, present in a fluid -- either gaseous or liquid. The invention also provides a device for filtering a medium and enables to analyze the filtered medium, either gaseous or liquid. The practice of the invention can employ relatively inexpensive measuring equipment that operates with dependability and accuracy and precision, and on a controllable automatic basis.

## Claims

1. Device (1) for collecting and transferring a quantity of particles that have an average size above a threshold size and that are dispersed in a medium, comprising
- a tubular body (2) of suitable thickness, having a first axial end (5) spaced from a second axial end (6), and having an extending rim (8) at said first axial end (5),
- a filter membrane (3) capable of being removably mounted on and spanning said first axial end (5) of said tubular body (2), said membrane which is provided with pores of a threshold size, being suitable for collecting particles having an average size above said threshold size, and
- an annular clamping body (4), capable of being removably mounted on said tubular body (2) and suitable for clamping said filter membrane (3) on said tubular body (2).

2. Device according to claim 1, wherein said extending rim (8) forms an annular mounting surface (7) recessed inwardly of the tubular body (2).

3. Device according to claim 1 or 2, wherein said filter membrane (3) has a diameter which is greater than the external diameter of said extending rim (8).

4. Device according to any of claims 1 to 3, wherein said filter membrane (3) has a surface (9) suitable for collecting thereon particles.

5. Device according to any of claims 1 to 4, wherein said filter membrane (3) is a membrane suitable for being visually examined.

6. Device according to any of claims 1 to 5, wherein said filter membrane (3) is provided with pores of a threshold size comprised between 0.2 µm and 15 µm.

7. Device according to any of claims 1 to 6, wherein said filter membrane (3) has a thickness comprised between 5 µm and 20 µm.

8. Device according to any of claims 1 to 7, wherein said annular clamping body (4) is suitable for being mounted on the annular mounting surface (7) recessed inwardly of the tubular body (2).

9. Device according to any of claims 1 to 8, wherein said annular clamping body (4) has an internal diameter, which is equal to or greater than the external diameter of the rim (8).

10. Method for fabricating a device (1) for particle collection and transfer comprising the steps of
providing a tubular body (2), having a first axial end (5) spaced from a second axial end (6), and having an extending rim (8) at said first axial end (5), said extending rim forming an annular mounting surface (7) recessed inwardly of the tubular body (2),
mounting a filter membrane (3), provided with a particle collecting surface, on the extending rim (8) at the first axial end (5) of said tubular body (2),
fastening said filter membrane (3) on said tubular body (2) by mounting an annular clamping body (4) on the extending rim (8) of said tubular body (2), such that said filter membrane (3) is clamped between said tubular body (2) and said annular clamping body (4),
shrinking said filter membrane (3) such that said particle collecting surface of said filter membrane is uniformly tensioned.

11. Method according to claim 10, wherein said fastening step comprises fastening said portion of the filter membrane (11) which at least partly covers the extending rim (8) of said tubular body (2) by mounting an annular clamping body (4) on said extending rim (8).

12. Method according to claim 10 or 11, wherein said shrinking step comprises providing heat to said filter membrane (3) such that said filter membrane is caused to shrink and is uniformly tensioned.

13. Kit for collecting and transferring a quantity of particles that have a average size above a threshold size and that are dispersed in a medium, comprising
- a tubular body (2) of suitable thickness, having a first axial end (5) spaced from a second axial end (6), and having an extending rim (8) at said first axial end (5),
- an annular clamping body (4), capable of being removably mounted on said extending rim (8) of said tubular body (2) and suitable for clamping a filter membrane (3) on said tubular body (2), and
- one or more filter membranes (3) capable of being removably mounted on and spanning said first axial end (5) of said tubular body (2), said membranes being provided with pores of a threshold size suitable for collecting particles above said threshold size, whereby said membranes may have a same or different pore sizes.

14. Kit according to claim 13, wherein said tubular body (2) has an extending rim (8) forming an annular mounting surface (7) recessed inwardly of the tubular body (2).

15. Kit according to claim 13 or 14, wherein said one or more filter membranes (3) have a diameter which is greater than the external diameter of said extending rim (8).

16. Kit according to any of claims 13 to 15, wherein said one or more filter membranes (3) have a surface (9) suitable for collecting thereon particles.

17. Kit according to any of claims 13 to 16, wherein said one or more filter membranes (3) are membranes suitable for being visually examined.

18. Kit according to any of claims 13 to 17, wherein said one or more filter membranes (3) are provided with pores of a threshold size comprised between 0.2 µm and 15 µm.

19. Kit according to any of claims 13 to 18, wherein said one or more filter membranes (3) have a thickness comprised between 5 µm and 20 µm.

20. Kit according to any of claims 13 to 19, wherein said annular clamping body (4) is suitable for being applied on the annular mounting surface (7) recessed inwardly of the tubular body (2).

21. Kit according to any of claims 13 to 20, wherein said annular clamping body (4) has an internal diameter, which is equal to or greater than the external diameter of the rim (8).

22. Kit according to any of claims 13 to 21, further comprising a collection vessel suitable for receiving a liquid medium that carries cells, which is capable of containing said tubular body (2).

23. Use of a device according to any of claims 1 to 9 for collecting and transferring a quantity of particles that have an average size above a threshold size and that are dispersed in a medium.

24. Use of a device according to any of claims 1 to 9 for filtering a medium such that a quantity of particles that have an average size above a threshold size and that are dispersed in a medium are retained on the filter membrane (3) of said device.

25. Method for visually examining a quantity of particles that have an average size above a threshold size and that are dispersed in a medium comprising the steps of
collecting said particles by bringing said particles into contact with a filter membrane (3) being removably mounted and spanned on a tubular body (2) by means of an annular clamping body (4), in a device according to any of claims 1 to 9, and
transferring said collected particles to an optical device, and
visually examining said collected particles.

26. Method according to claim 25, wherein said collected particles are transferred to a carrier for optical examination, suitable for being used in an optical device, by bringing the particle carrying surface of said filter membrane (3) into abutment with said carrier.

27. Method according to claim 25, wherein said particle carrying surface of said filter membrane (3) is transferred to an optical device.

28. Method for filtering a medium comprising a quantity of particles that have an average size above a threshold size and that are dispersed in said medium comprising the steps of:
separating said particles from said medium by bringing said medium into contact with a filter membrane (3) being removably mounted and spanned on a tubular body (2) by means of an annular clamping body (4), in a device according to any of claims 1 to 9, such that said particles comprised in said medium are collected on said filter membrane (3),
collecting the medium passing through said filter membrane (3).
